# EUROPEAN PATENT SPECIFICATION

(11) **EP 4 273 955 B1**
(45) Date of publication and mention of the grant of the patent: **08.10.2025**
(21) Application number: 22760125.9
(22) Date of filing: 25.02.2022
(51) Int. Cl.: H01M 4/131, H01M 4/525, H01M 4/505, H01M 10/052, H01M 4/02, H01M 4/36, H01M 10/0525

(54) **POSITIVE ELECTRODE, AND LITHIUM SECONDARY BATTERY COMPRISING SAME**
POSITIVELEKTRODE UND LITHIUMSEKUNDÄRBATTERIE DAMIT
ÉLECTRODE POSITIVE ET BATTERIE SECONDAIRE AU LITHIUM LA COMPRENANT

(30) Priority: 26.02.2021 KR 20210026597
(43) Date of publication of application: 08.11.2023
(73) Proprietor: LG ENERGY SOLUTION, LTD., Seoul 07335 (KR)
(72) Inventor: LEE, Dong Hun, Daejeon 34122 (KR); KIM, Hak Yoon, Daejeon 34122 (KR); BAEK, So Ra, Daejeon 34122 (KR); HUR, Hyuck, Daejeon 34122 (KR); KIM, Dong Hwi, Daejeon 34122 (KR); KIM, Hyeong Il, Daejeon 34122 (KR); CHAE, Seul Ki, Daejeon 34122 (KR); JUNG, Wang Mo, Daejeon 34122 (KR)
(74) Representative: Hoffmann Eitle
(86) International application number: PCT/KR2022/002820
(87) International publication number: WO 2022/182209

(56) References cited:
- WO-A1-2020/122497
- KR-A- 20150 043 769
- KR-A- 20190 012 839
- KR-A- 20200 043 612
- KR-A- 20200 135 060
- KR-A- 20200 142 340
- US-A1- 2020 091 515
- US-A1- 2020 266 438
- US-A1- 2020 388 830

## Description

### TECHNICAL FIELD

The present invention relates to a positive electrode and a lithium secondary battery including the same, and more particularly, to a high-loading positive electrode having improved life characteristics and a lithium secondary battery including the same.

### BACKGROUND ART

Demand for secondary batteries as an energy source has been significantly increased as demand with respect to mobile devices and electric vehicles have increased, and, among these secondary batteries, lithium secondary batteries having high energy density and low self-discharging rate have been commercialized and widely used.

Recently, demand for high-capacity batteries is increasing in industrial fields such as electric vehicles and energy storage systems (ESS), and, accordingly, development of a high-loading positive electrode, which includes a high-nickel (high-Ni) positive electrode active material having excellent capacity characteristics in a high loading amount, is in progress.

The high-loading positive electrode has an advantage of having excellent capacity characteristics, but, since lithium (Li) movement is not easy in a positive electrode active material layer as the loading amount is increased, a relatively large amount of lithium ions moves on a surface than in the positive electrode active material layer, and, as a result, there is a problem in that electrode degradation proceeds rapidly to degrade life characteristics. Thus, there is a need to develop a high-loading electrode having excellent life characteristics.

US 2020/266438 A1 describes a positive electrode material including first and second positive electrode active materials that consist of a lithium composite transition metal oxide including at least two or more transition metals selected from Ni, Co and Mn. The average particle size (D50) of the first positive electrode active material is two or more times larger than that of the second positive electrode active material, and the first positive electrode active material has a concentration gradient in which at least one of Ni, Co or Mn contained in the lithium composite transition metal oxide has a concentration difference of 1.5 mol% or more between the center and the surface of a particle of the lithium composite transition metal oxide.

WO 2020/122497 A1 describes a cathode material having a bimodal particle size distribution comprising large-diameter particles and small-diameter particles, wherein the large-diameter particles are lithium composite transition metal oxide, which has a nickel content of 80 atm% or more in the total transition metals thereof, and the small-diameter particles are lithium composite transition meal oxide, which contains nickel, cobalt, and aluminum, has a nickel content of 80-85 atm% in the total transition metals thereof, and has an atomic ratio of cobalt to the aluminum (Co/Al) of 1.5-5.

US 2020/388830 A1 describes a positive electrode active material for a secondary battery that includes a first positive electrode active material and a second positive electrode active material, wherein an average particle diameter (D50) of the first positive electrode active material is twice or more than an average particle diameter (D50) of the second positive electrode active material, and the second positive electrode active material has a crystallite size of 200 nm or more.

### DISCLOSURE OF THE INVENTION

### TECHNICAL PROBLEM

An aspect of the present invention provides a high-loading positive electrode, in which life characteristics are improved by improving lithium mobility in a positive electrode active material layer by controlling a molar ratio of nickel to cobalt of a positive electrode active material disposed on a surface of and in the positive electrode active material layer, and a lithium secondary battery including the positive electrode.

### TECHNICAL SOLUTION

According to an aspect of the present invention, there is provided a positive electrode including a positive electrode collector, a first positive electrode active material layer which is formed on the positive electrode collector and includes a first positive electrode active material, and a second positive electrode active material layer which is formed on the first positive electrode active material layer and includes a second positive electrode active material, wherein the first positive electrode active material and the second positive electrode active material include a lithium nickel-cobalt-based oxide in which an amount of nickel among total metallic components excluding lithium is 80 atm% or more, the first positive electrode active material has a molar ratio of nickel to cobalt of 18 or more, and the second positive electrode active material has a molar ratio of nickel to cobalt of less than 18.

According to another aspect of the present invention, there is provided a lithium secondary battery including the positive electrode as described above.

### ADVANTAGEOUS EFFECTS

Since a positive electrode of the present invention includes two positive electrode active material layers and improves lithium mobility in the positive electrode active material layer by disposing a positive electrode active material having a relatively small molar ratio of nickel to cobalt on the upper positive electrode active material layer in contact with an electrolyte solution, life characteristics may be improved.

### MODE FOR CARRYING OUT THE INVENTION

Hereinafter, the present invention will be described in detail.

As a result of a significant amount of research conducted into improving life characteristics of a lithium secondary battery using a high-loading positive electrode, the present inventors have found that life characteristics of the high-loading electrode may be improved by forming a positive electrode active material layer in a two-layer structure that satisfies a specific nickel/cobalt molar ratio, thereby leading to the completion of the present invention.

### Positive Electrode

A positive electrode according to the present invention includes a positive electrode collector, a first positive electrode active material layer which is formed on the positive electrode collector and includes a first positive electrode active material, and a second positive electrode active material layer which is formed on the first positive electrode active material layer and includes a second positive electrode active material.

The positive electrode collector is for supporting the positive electrode active material layer, and a positive electrode collector generally used in the art may be used. For example, the positive electrode collector may be a film, a sheet, a foil, a net, a porous body, a foam body, or a nonwoven fabric body which is formed of a material such as aluminum, stainless steel, nickel, or titanium.

Also, the positive electrode collector may be surface-treated to improve physical properties such as adhesion and strength. For example, the positive electrode collector may include a coating layer formed of a material, such as carbon, nickel, titanium, and silver, on a surface thereof, or may have microscopic irregularities formed on the surface thereof.

The positive electrode collector may typically have a thickness of 3 µm to 500 µm.

The first positive electrode active material layer is a positive electrode active material layer formed on the positive electrode collector, that is, a lower positive electrode active material layer, wherein it includes a first positive electrode active material.

The first positive electrode active material is a lithium transition metal oxide containing nickel and cobalt, and, specifically, is a lithium nickel-cobalt-based oxide in which an amount of nickel among metallic components excluding lithium is in a range of 80 mol% or more, preferably 90 mol% or more, and more preferably 90 mol% to 95 mol%, and a molar ratio of nickel to cobalt is in a range of 18 or more, for example, 18 to 50. When the amount of the nickel of the first positive electrode active material satisfies the above range, high-capacity characteristics may be achieved. Also, in a case in which the molar ratio of the nickel to the cobalt of the first positive electrode active material is outside the above range, an effect of improving lithium mobility in the positive electrode active material layer is insignificant.

Preferably, the first positive electrode active material may be a lithium transition metal oxide represented by [Formula 1] below.

[Formula 1] Liₐ₁[Niₓ₁Co_{y1}M¹_{z1}M²_{w1}]O₂

In Formula 1, M¹ may be manganese (Mn), aluminum (Al), or a combination thereof, and may preferably be Mn or a combination of Mn and Al.
M² may be at least one selected from the group consisting of zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S).
a1 represents a molar ratio of lithium in the lithium transition metal oxide, wherein a1 may satisfy 0.8≤a1≤1.2, 0.9≤a1≤1.1,or 0.95≤a1≤1.1.
x1 represents a molar ratio of nickel among metallic components excluding lithium in the lithium transition metal oxide, wherein x1 may satisfy 0.90≤x1<1,0.90≤x1≤0.98, or 0.90≤x1≤0.95. In a case in which the molar ratio of the nickel satisfies the above range, excellent capacity characteristics may be achieved.
y1 represents a molar ratio of cobalt among the metallic components excluding lithium in the lithium transition metal oxide, wherein y1 may satisfy 0<y1<0.10, 0.01≤y1<0.10, or 0.01≤y1≤0.06.
z1 represents a molar ratio of M¹ among the metallic components excluding lithium in the lithium transition metal oxide, wherein z1 may satisfy 0<z1<0.10, 0.01≤z1≤0.08, or 0.01≤z1≤0.06.
w1 represents a molar ratio of M² among the metallic components excluding lithium in the lithium transition metal oxide, wherein w1 may satisfy 0≤w1<0.10, 0≤w1≤0.05, or 0≤w1≤0.02.

In Formula 1, a molar ratio of nickel to cobalt, that is, x1/y1 may be 18 or more, for example, 18 to 50. In a case in which x1/y1 is less than 18, the effect of improving the lithium mobility in the high-loading positive electrode active material layer is insignificant.

The first positive electrode active material, for example, may have a cation mixing of greater than 1.2%, preferably, greater than 1.2% and equal to or less than 2.0%.

The first positive electrode active material may be included in an amount of 80 wt% or more, preferably 80 wt% to 100 wt%, and more preferably 85 wt% to 98 wt% based on a total weight of the first positive electrode active material layer. When the amount of the first positive electrode active material satisfies the above range, lithium ions may move more smoothly during charge and discharge in the high-loading electrode.

Also, the first positive electrode active material layer may have a thickness of 30 µm to 300 µm, preferably 50 µm to 200 µm, and more preferably 70 µm to 150 µm. When the thickness of the first positive electrode active material layer satisfies the above range, high-loading characteristics may be achieved.

Next, the second positive electrode active material layer is a positive electrode active material layer formed on the first positive electrode active material layer, that is, an upper positive electrode active material layer, wherein it includes a second positive electrode active material.

The second positive electrode active material is a lithium transition metal oxide containing nickel and cobalt, and, specifically, is a lithium nickel-cobalt-based oxide in which an amount of nickel among metallic components excluding lithium is in a range of 80 mol% or more, preferably 80 mol% or more to less than 90 mol%, and more preferably 81 mol% to 89 mol%, and a molar ratio of nickel to cobalt is in a range of less than 18, preferably 5 to 17.8, and more preferably 7 to 17.6.

When the amount of the nickel of the second positive electrode active material satisfies the above range, high-capacity characteristics may be achieved. Also, in a case in which the molar ratio of the nickel to the cobalt of the second positive electrode active material satisfies the above range, since movements of lithium ions on a surface of and in the positive electrode active material layer are balanced, occurrence of rapid structural degradation on the surface of the positive electrode active material layer may be prevented.

Preferably, the second positive electrode active material may be a lithium transition metal oxide represented by [Formula 2] below.

[Formula 2] Liₐ₂[Niₓ₂Co_{y2}M³_{z2}M⁴_{w2}]O₂

In Formula 2,
M³ may be Mn, Al, or a combination thereof, and may preferably be Mn or a combination of Mn and Al.
M⁴ may be at least one selected from the group consisting of Zr, B, W, Mg, Ce, Hf, Ta, La, Ti, Sr, Ba, F, P, and S.
a2 represents a molar ratio of lithium in the lithium transition metal oxide, wherein a2 may satisfy 0.8≤a2≤1.2, 0.9≤a2≤1.1, or 0.95≤a2≤1.1.
x2 represents a molar ratio of nickel among metallic components excluding lithium in the lithium transition metal oxide, wherein x2 may satisfy 0.80≤x2<0.90,0.81≤x2≤0.89, or 0.83≤x2≤0.89. When the molar ratio of the nickel satisfies the above range, excellent capacity characteristics may be achieved.
y2 represents a molar ratio of cobalt among the metallic components excluding lithium in the lithium transition metal oxide, wherein y2 may satisfy 0<y2<0.20, 0.01≤y2<0.20, or 0.01≤y2≤0.15.
z2 represents a molar ratio of M³ among the metallic components excluding lithium in the lithium transition metal oxide, wherein z2 may satisfy 0<z2<0.20, 0.01≤z2<0.20, or 0.01≤z2≤0.15.
w2 represents a molar ratio of M⁴ among the metallic components excluding lithium in the lithium transition metal oxide, wherein w2 may satisfy 0≤w2<0.20, 0≤w2≤0.10, or 0≤w2≤0.05.

In Formula 2, a molar ratio of nickel to cobalt, that is, x2/y2 may be less than 18, preferably 5 to 17.8, and more preferably 7 to 17.6. In a case in which x2/y2is 18 or more, the effect of improving the lithium mobility in the high-loading positive electrode active material layer is insignificant.

It is desirable that the second positive electrode active material has a cation mixing of 1.2% or less, for example, 1.0% or less. In a case in which the cation mixing of the second positive electrode active material satisfies the above range, that is, in a case in which the cation mixing of the second positive electrode active material is lower than the cation mixing of the first positive electrode active material, an effect of further improving the lithium mobility may be obtained.

The second positive electrode active material may be included in an amount of 80 wt% or more, preferably 80 wt% to 100 wt%, and more preferably 85 wt% to 98 wt% based on a total weight of the second positive electrode active material layer. When the amount of the second positive electrode active material satisfies the above range, the lithium ions may move smoothly during charge and discharge in the high-loading electrode.

Also, the second positive electrode active material layer may have a thickness of 10 µm or less, preferably 1 µm to 10 µm, and more preferably 2 µm to 5 µm. When the thickness of the second positive electrode active material layer satisfies the above range, lifetime degradation due to imbalance of lithium mobility may be effectively suppressed while minimizing a decrease in energy density.

The first positive electrode active material layer and the second positive electrode active material layer may further include a conductive agent and a binder in addition to the positive electrode active material.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The conductive agent may be included in an amount of 10 wt% or less, preferably 0.2 wt% to 5 wt%, and more preferably 0.5 wt% to 2 wt% based on the total weight of the first positive electrode active material layer or the second positive electrode active material layer. When the amount of the conductive agent satisfies the above range, electrochemical performance and energy density may be optimized.

The binder is to improve the adhesion between positive electrode active material particles and the adhesion between the positive electrode active material and the current collector, wherein a binder generally known in the art may be used.

For example, as the binder, polyvinylidene fluoride (PVDF),polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof may be used, and any one thereof or a mixture of two or more thereof may be used.

The binder may be included in an amount of 10 wt% or less, preferably 0.2 wt% to 5 wt%, and more preferably 0.5 wt% to 2 wt% based on the total weight of the first positive electrode active material layer or the second positive electrode active material layer. When the amount of the binder satisfies the above range, the electrochemical performance and energy density may be optimized.

The positive electrode may have a loading amount of 4 mAh/cm² or more, for example, 4 mAh/cm² to 20 mAh/cm². In a case in which the loading amount satisfies the above range, high energy density may be achieved.

After preparing a first positive electrode slurry composition including the first positive electrode active material and a second positive electrode slurry composition including the second positive electrode active material, the positive electrode according to the present invention may be prepared by a method of sequentially coating the first positive electrode slurry composition and the second positive electrode slurry composition.

For example, after the first positive electrode slurry composition is coated on the positive electrode collector and dried to form the first positive electrode active material layer and the second positive electrode slurry composition is coated on the first positive electrode active material layer and dried to form the second positive electrode active material layer, the positive electrode according to the present invention may be prepared by rolling.

Also, after the first positive electrode slurry composition is coated on a separate support and dried to form the first positive electrode active material layer and the second positive electrode slurry composition is coated on the first positive electrode active material layer and dried to form the second positive electrode active material layer, the positive electrode according to the present invention may be prepared by a method of separating a first positive electrode active material layer and second positive electrode active material layer stack from the support and laminating the stack on the positive electrode collector.

The first positive electrode slurry composition and the second positive electrode slurry composition may be prepared by dispersing the positive electrode active material, the conductive agent, and the binder in a solvent, and, in this case, a solvent normally used in the art, for example, dimethyl sulfoxide (DMSO), isopropyl alcohol, N-methylpyrrolidone (NMP), acetone, water, or a mixed solvent thereof may be used as the solvent. In this case, the solvent may be used in an amount such that the solvent may dissolve or disperse the positive electrode active material, the conductive agent, and the binder in consideration of a coating thickness of the positive electrode slurry and manufacturing yield, and may allow to have a viscosity that may provide excellent thickness uniformity during the coating.

### Lithium Secondary Battery

Next, a lithium secondary battery according to the present invention will be described.

The lithium secondary battery according to the present invention includes the above-described positive electrode according to the present invention. Specifically, the lithium secondary battery according to the present invention may include the positive electrode according to the present invention, a negative electrode disposed to face the positive electrode, a separator disposed between the positive electrode and the negative electrode, and an electrolyte. Since the positive electrode is the same as described above, detailed descriptions thereof will be omitted, and the remaining configurations will be only described in detail below.

The negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a nonwoven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic material alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOβ(0<β<2), SnO₂, vanadium oxide, and lithium vanadium oxide; or a composite including the metallic material and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrilebutadiene rubber, a fluorine rubber, and various copolymers thereof.

The conductive agent is a component for further improving conductivity of the negative electrode active material, wherein the conductive agent may be added in an amount of 10 wt% or less, for example, 5wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode slurry composition, which is prepared by dissolving or dispersing optionally the binder and the conductive agent as well as the negative electrode active material in a solvent, on the negative electrode collector and drying the coated negative electrode collector, or may be prepared by casting the negative electrode slurry composition on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an esterbased solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a doublebond aromatic ring or ether bond); amides such as dimethylformamide; dioxolanes such as 1,3-dioxolane; or sulfolanes may be used as the organic solvent.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN (C₂F₅SO₃)₂, LiN(C₂F₅SO₂)₂, LiN(CF₃SO₂)₂, LiCl, LiI, or LiB(C₂O₄)₂may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

Hereinafter, the present invention will be described in more detail through specific examples.

### Example 1

LiNi_{0.9}Co_{0.05}Mn_{0.05}O₂ having a cation mixing of 1.3% as a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.83}Co_{0.11}Mn_{0.06}O₂ having a cation mixing of less than 1% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 6.85 mAh/cm².

### Example 2

LiNi_{0.9}Co_{0.04}Mn_{0.06}O₂ having a cation mixing of 1.5%as a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.85}Co_{0.07}Mn_{0.08}O₂ having a cation mixing of less than 1% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 6.85 mAh/cm².

### Example 3

LiNi_{0.9}Co_{0.02}Mn_{0.08}O₂ having a cation mixing of 1.7% s a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.88}Co_{0.05}Mn_{0.07}O₂ having a cation mixing of 1.2% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 6.9 mAh/cm².

### Example 4

LiNi_{0.92}Co_{0.05}Mn_{0.03}O₂ having a cation mixing of 1.3% as a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.83}Co_{0.11}Mn_{0.06}O₂ having a cation mixing of less than 1% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 6.9 mAh/cm².

### Example 5

LiNi_{0.92}Co_{0.04}Mn_{0.04}O₂ having a cation mixing of 1.4% as a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.85}Co_{0.07}Mn_{0.08}O₂ having a cation mixing of less than 1% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 6.9 mAh/cm².

### Example 6

LiNi_{0.92}Co_{0.02}Mn_{0.06}O₂ having a cation mixing of 1.7% as a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.88}Co_{0.05}Mn_{0.07}O₂ having a cation mixing of 1.2% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 6.9 mAh/cm².

### Example 7

LiNi_{0.94}Co_{0.05}Mn_{0.01}O₂ having a cation mixing of 1.4% as a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.83}Co_{0.11}Mn_{0.06}O₂ having a cation mixing of less than 1% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 6.9 mAh/cm².

### Example 8

LiNi_{0.94}Co_{0.04}Mn_{0.02}O₂ having a cation mixing of 1.5% as a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.85}Co_{0.07}Mn_{0.06}O₂ having a cation mixing of less than 1% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 7 mAh/cm².

### Example 9

LiNi_{0.54}Co_{0.02}Mn_{0.04}O₂ having a cation mixing of 1.7% as a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.88}Co_{0.05}Mn_{0.07}O₂ having a cation mixing of 1.2% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 7 mAh/cm².

### Comparative Example 1

LiNi_{0.9}Co_{0.04}Mn_{0.06}O₂ having a cation mixing of 1.5% as a positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a positive electrode slurry.

The positive electrode slurry composition was coated on an aluminum current collector, dried at 130°C, and then roll-pressed to prepare a positive electrode. In this case, a thickness of the positive electrode active material layer was 100 µm, and a loading amount of the positive electrode was 6.9 mAh/cm².

### Comparative Example 2

LiNi_{0.92}Co_{0.04}Mn_{0.04}O₂ having a cation mixing of 1.4% as a positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a positive electrode slurry.

The positive electrode slurry composition was coated on an aluminum current collector, dried at 130°C, and then roll-pressed to prepare a positive electrode. In this case, a thickness of the positive electrode active material layer was 100 µm, and a loading amount of the positive electrode was 7 mAh/cm².

### Comparative Example 3

LiNi_{0.94}Co_{0.04}Mn_{0.02}O₂ having a cation mixing of 1.5% as a positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a positive electrode slurry.

The positive electrode slurry composition was coated on an aluminum current collector, dried at 130°C, and then roll-pressed to prepare a positive electrode. In this case, a thickness of the positive electrode active material layer was 100 µm, and a loading amount of the positive electrode was 7 mAh/cm².

### Comparative Example 4

LiNi_{0.9}Co_{0.04}Mn_{0.06}O₂ having a cation mixing of 1.5% as a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.9}Co_{0.05}Mn_{0.05}O₂ having a cation mixing of 1.3% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 6.9 mAh/cm².

### Comparative Example 5

LiNi_{0.88}Co_{0.05}Mn_{0.07}O₂ having a cation mixing of 1.2% as a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.85}Co_{0.07}Mn_{0.08}O₂ having a cation mixing of less than 1% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 6.9 mAh/cm².

### Comparative Example 6

LiNi_{0.85}Co_{0.07}Mn_{0.08}O₂ having a cation mixing of less than 1% as a first positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a first positive electrode slurry.

LiNi_{0.9}Co_{0.04}Mn_{0.06}O₂ having a cation mixing of 1.5% as a second positive electrode active material, carbon black as a conductive agent, polyvinylidene fluoride, as a binder, were mixed in a N-methylpyrrolidone solvent so that a weight ratio of the positive electrode active material : the conductive agent : the binder was 98.5 : 0.5 : 1 to prepare a second positive electrode slurry.

After the first positive electrode slurry composition was coated on an aluminum current collector and dried to form a first positive electrode active material layer, the second positive electrode slurry composition was coated on the first positive electrode active material layer, dried at 130°C, and then roll-pressed to prepare a positive electrode. In this case, a thickness of the first positive electrode active material layer was 98 µm and a thickness of the second positive electrode active material layer was 2 µm based on a cross section of the positive electrode, and a loading amount of the positive electrode was 6.8 mAh/cm².

### Experimental Example 1

After an electrode assembly was prepared by disposing a porous polyethylene separator between each of the positive electrodes prepared according to Examples 1 to 9 and Comparative Examples 1 to 6 and a lithium metal negative electrode, an electrolyte solution, in which 2 wt% of vinyl carbonate (VC) was added and 1 M LiPF₆ was dissolved in an organic solvent in which ethylene carbonate(EC):dimethyl carbonate(DMC):ethyl methyl carbonate (EMC) were mixed in a ratio of 3:4:3, was injected to prepare a lithium secondary battery.

Each of the lithium secondary batteries prepared as described above was charged at a constant current of 0.1 C to 4.25 V at 25°C, and then discharged at a constant current of 0.1 C to 2.5 V to measure discharge capacity.

Measurement results are presented in Table 1 below.

### Experimental Example 2

Charging of each of the lithium secondary batteries prepared in Experimental Example 1 at a constant current of 0.3 C to 4.25 V at 45°C and discharging of each lithium secondary battery at a constant current of 0.3 C to 2.5 V were set as one cycle, and, after 100 cycles of charging and discharging were performed, a capacity retention after 100 cycles was measured to measure life characteristics.

Measurement results are presented in Table 1 below.

**[Table 1]**

| | First positive electrode active material layer | | Second positive electrode active material layer | | Discharge capacity (mAh/g) | Life characterist ics (%) |
|---|---|---|---|---|---|---|
| | Ni/Co molar ratio (%) | Cation mixing (%) | Ni/Co molar ratio (%) | Cation mixing (%) | | |
| Example 1 | 18 | 1.3 | 7.5 | <1 | 216 | 94 |
| Example 2 | 22.5 | 1.5 | 12.1 | <1 | 217 | 94 |
| Example 3 | 45 | 1.7 | 17.6 | 1.2 | 218 | 93 |
| Example 4 | 18.4 | 1.3 | 7.5 | <1 | 218 | 92 |
| Example 5 | 23 | 1.4 | 12.1 | <1 | 218 | 92 |
| Example 6 | 46 | 1.7 | 17.6 | 1.2 | 219 | 90 |
| Example 7 | 18.8 | 1.4 | 7.5 | <1 | 218 | 91 |
| Example 8 | 23.5 | 1.5 | 12.1 | <1 | 220 | 90 |
| Example 9 | 47 | 1.7 | 17.6 | 1.2 | 221 | 88 |
| Comparative Example 1 | 22.5 | 1.5 | 22.5 | 1.5 | 218 | 83 |
| Comparative Example 2 | 23 | 1.4 | 23 | 1.4 | 220 | 80 |
| Comparative Example 3 | 23.5 | 1.5 | 23.5 | 1.5 | 222 | 77 |
| Comparative Example 4 | 22.5 | 1.5 | 18 | 1.3 | 221 | 70 |
| Comparative Example 5 | 17.6 | 1.2 | 12.1 | <1 | 217 | 85 |
| Comparative Example 6 | 12.1 | <1 | 22.5 | 1.5 | 215 | 87 |

As illustrated in Table 1, with respect to the lithium secondary batteries using the positive electrodes of Examples 1 to 9 in which Ni/Co ratios of the first positive electrode active material and the second positive electrode active material satisfied the range of the present invention, life characteristics were significantly improved in comparison to those of the lithium secondary batteries using the positive electrodes of Comparative Examples 1 to 6.

## Claims

1. A positive electrode comprising a positive electrode collector; a first positive electrode active material layer which is formed on the positive electrode collector and includes a first positive electrode active material; and a second positive electrode active material layer which is formed on the first positive electrode active material layer and includes a second positive electrode active material,
wherein the first positive electrode active material and the second positive electrode active material comprise a lithium nickel-cobalt-based oxide in which an amount of nickel among total metallic components excluding lithium is 80 atm% or more,
the first positive electrode active material has a molar ratio of nickel to cobalt of 18 or more, and
the second positive electrode active material has a molar ratio of nickel to cobalt of less than 18.

2. The positive electrode of claim 1, wherein the first positive electrode active material has the molar ratio of the nickel to the cobalt of 18 to 50, and
the second positive electrode active material has the molar ratio of the nickel to the cobalt of 5 to 17.8.

3. The positive electrode of claim 1, wherein the first positive electrode active material has a cation mixing of greater than 1.2%, and
the second positive electrode active material has a cation mixing of 1.2% or less.

4. The positive electrode of claim 3, wherein the first positive electrode active material has the cation mixing of 1.2% to 2%, and
the second positive electrode active material has the cation mixing of 1.0% or less.

5. The positive electrode of claim 1, wherein the first positive electrode active material has the amount of the nickel among the total metallic components excluding the lithium of 90 mol% or more, and
the second positive electrode active material has the amount of the nickel among the total metallic components excluding the lithium of 80 mol% or more to less than 90 mol%.

6. The positive electrode of claim 1, wherein the first positive electrode active material comprises a first lithium nickel-cobalt-based oxide represented by [Formula 1].
[Formula 1] Liₐ₁[Niₓ₁Co_{y1}M¹_{z1}M²_{w1}]O₂
wherein, in Formula 1,
M¹is manganese (Mn), aluminum (Al), or a combination thereof,
M²is at least one selected from the group consisting of zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and
0.8≤a1≤1.2, 0.90≤x1<1, 0<y1<0.10,0<z1<0.10,0≤w1<0.10, and 18≤x1/y1.

7. The positive electrode of claim 1, wherein the second positive electrode active material comprises a second lithium nickel-cobalt-based oxide represented by [Formula 2].
[Formula 2] Liₐ₂[Niₓ₂Co_{y2}M³_{z2}M⁴_{w2}]O₂
wherein, in Formula 2,
M³ is Mn, Al, or a combination thereof,
M⁴ is at least one selected from the group consisting of Zr, B, W, Mg, Ce, Hf, Ta, La, Ti, Sr, Ba, F, P, and S, and
0.8≤a2≤1.2, 0.80≤x2<0.90, 0<y2<0.20, 0<z2<0.20, 0≤w2<0.20, and x2/y2<18.

8. The positive electrode of claim 1, wherein the second positive electrode active material layer has a thickness of 10 µm or less.

9. The positive electrode of claim 1, wherein the positive electrode has a loading amount of 4 mAh/cm² or more

10. The positive electrode of claim 9, wherein the positive electrode has the loading amount of 4 mAh/cm² to 20 mAh/cm²

11. A lithium secondary battery comprising the positive electrode of any one of claims 1 to 10.

## Patentansprüche

1. Positivelektrode, umfassend einen Positivelektrodenkollektor; eine erste Positivelektrodenaktivmaterialschicht, die auf dem Positivelektrodenkollektor gebildet ist und ein erstes Positivelektrodenaktivmaterial einschließt; und eine zweite Positivelektrodenaktivmaterialschicht, die auf der ersten Positivelektrodenaktivmaterialschicht gebildet ist und ein zweites Positivelektrodenaktivmaterial einschließt,
wobei das erste Positivelektrodenaktivmaterial und das zweite Positivelektrodenaktivmaterial ein Oxid auf Lithium-Nickel-Cobalt-Basis umfassen, in dem eine Menge von Nickel unter den gesamten metallischen Komponenten ausschließlich Lithium 80 atm% oder mehr beträgt,
das erste Positivelektrodenaktivmaterial ein Molverhältnis von Nickel zu Cobalt von 18 oder mehr aufweist, und
das zweite Positivelektrodenaktivmaterial ein Molverhältnis von Nickel zu Cobalt von weniger als 18 aufweist.

2. Positivelektrode nach Anspruch 1, wobei das erste Positivelektrodenaktivmaterial das Molverhältnis von Nickel zu Cobalt von 18 bis 50 aufweist, und
das zweite Positivelektrodenaktivmaterial das Molverhältnis von Nickel zu Cobalt von 5 bis 17,8 aufweist.

3. Positivelektrode nach Anspruch 1, wobei das erste Positivelektrodenaktivmaterial eine Kationenmischung von mehr als 1,2 % aufweist und
das zweite Positivelektrodenaktivmaterial eine Kationenmischung von 1,2 % oder weniger aufweist.

4. Positivelektrode nach Anspruch 3, wobei das erste Positivelektrodenaktivmaterial die Kationenmischung von 1,2 % bis 2 % aufweist, und
das zweite Positivelektrodenaktivmaterial die Kationenmischung von 1,0 % oder weniger aufweist.

5. Positivelektrode nach Anspruch 1, wobei das erste Positivelektrodenaktivmaterial die Menge von Nickel unter den gesamten metallischen Komponenten ausschließlich des Lithiums von 90 mol-% oder mehr aufweist, und
das zweite Positivelektrodenaktivmaterial die Menge von Nickel unter den gesamten metallischen Komponenten ausschließlich des Lithiums von 80 mol-% oder mehr bis weniger als 90 mol-% aufweist.

6. Positivelektrode nach Anspruch 1, wobei das erste Positivelektrodenaktivmaterial ein erstes Oxid auf Lithium-Nickel-Cobalt-Basis umfasst, das durch [Formel 1] dargestellt ist.
[Formel 1] Liₐ₁[Niₓ₁Co_{y1}M¹_{z1}M²_{w1}]O₂
wobei in Formel 1,
M¹ Mangan (Mn), Aluminium (Al) oder eine Kombination daraus ist,
M² mindestens eines ist, ausgewählt aus der Gruppe bestehend aus Zirkonium (Zr), Bor (B), Tungsten (W), Magnesium (Mg), Cerium (Ce), Hafnium (Hf), Tantal (Ta), Lanthan (La), Titan (Ti), Strontium (Sr), Barium (Ba), Fluor (F), Phosphor (P) und Schwefel (S), und
0,8≤a1≤1,2, 0,90≤x1<1, 0<y1<0,10,0<z1<0,10,0≤w1<0,10 und 18≤x1/y1.

7. Positivelektrode nach Anspruch 1, wobei das zweite Positivelektrodenaktivmaterial ein zweites Oxid auf Lithium-Nickel-Cobalt-Basis umfasst, das durch [Formel 2] dargestellt ist.
[Formel 2] Liₐ₂[Niₓ₂Co_{y2}M³_{z2}M⁴_{w2}]O₂
wobei in Formel 2
M³ Mn, Al oder einer Kombination daraus ist,
M⁴ mindestens eines ist, ausgewählt aus der Gruppe bestehend aus Zr, B, W, Mg, Ce, Hf, Ta, La, Ti, Sr, Ba, F, P und S, und
0,8≤a2≤1,2, 0,80≤x2<0,90, 0<y2<0,20, 0<z2<0,20, 0≤w2<0,20 und x2/y2<18.

8. Positivelektrode nach Anspruch 1, wobei die zweite Positivelektrodenaktivmaterialschicht eine Dicke von 10 µm oder weniger aufweist.

9. Positivelektrode nach Anspruch 1, wobei die Positivelektrode eine Lademenge von 4 mAh/cm² oder mehr aufweist.

10. Positivelektrode nach Anspruch 9, wobei die Positivelektrode die Lademenge von 4 mAh/cm² bis 20 mAh/cm² aufweist.

11. Lithiumsekundärbatterie, umfassend die Positivelektrode nach einem der Ansprüche 1 bis 10.

## Revendications

1. Électrode positive comprenant un collecteur d'électrode positive, une première couche de matériau actif d'électrode positive qui est formée sur le collecteur d'électrode positive et inclut un premier matériau actif d'électrode positive et une seconde couche de matériau d'électrode positive formée sur la première couche de matériau actif d'électrode positive et qui inclut un second matériau actif d'électrode positive,
dans laquelle le premier matériau actif d'électrode positive et le second matériau actif d'électrode positive comprennent un oxyde lithium-nickel-cobalt dans lequel la quantité de nickel parmi les composants métalliques totaux à l'exclusion du lithium est de 80 % atm ou plus,
le premier matériau actif d'électrode positive présente un rapport molaire du nickel sur le cobalt de 18 ou plus, et
le second matériau actif d'électrode positive présente un rapport molaire du nickel sur le cobalt inférieur à 18.

2. Électrode positive selon la revendication 1, dans laquelle le premier matériau actif d'électrode positive présente le rapport molaire du nickel sur le cobalt de 18 à 50, et
le second matériau actif d'électrode positive présente le rapport molaire du nickel sur le cobalt de 5 à 17,8.

3. Électrode positive selon la revendication 1, dans laquelle le premier matériau actif de l'électrode positive présente un mélange de cations supérieur à 1,2 %, et
le second matériau actif d'électrode positive présente un mélange de cations inférieur ou égal à 1,2 %.

4. Électrode positive selon la revendication 3, dans laquelle le premier matériau actif d'électrode positive présente le mélange de cations supérieur de 1,2 % à 2%, et
le second matériau actif d'électrode positive présente le mélange de cations de 1,0 % ou moins.

5. Électrode positive selon la revendication 1, dans laquelle le premier matériau actif d'électrode positive présente la teneur en nickel parmi les composants métalliques totaux à l'exclusion du lithium de 90 % en mole ou plus, et
le second matériau actif de l'électrode positive présente la teneur en nickel parmi les composants métalliques totaux à l'exclusion du lithium de 80 % en mole ou plus jusqu'à moins de 90 % en mole.

6. Électrode positive selon la revendication 1, dans laquelle le premier matériau actif d'électrode positive comprend un premier oxyde lithium-cobalt-nickel représenté par la [Formule 1] :
[Formule 1] Liₐ₁[Niₓ₁Co_{y1}M¹_{z1}M²_{w1}]O₂
dans laquelle, dans la Formule 1,
M¹ est le manganèse (Mn), l'aluminium (AI), ou une combinaison de ceux-ci,
M² est au moins un élément choisi parmi le groupe consistant en le zirconium (Zr), le bore (B), le tungstène (W), le magnésium (Mg), le cérium (Ce), l'hafnium (Hf), le tantale (Ta), le lanthane (La), le titane (Ti), le strontium (Sr), le baryum (Ba), le fluor (F), le phosphore (P) et le soufre (S), et
0,8≤a1≤1,2, 0,90≤x1<1, 0<y1<0,10, 0<z1<0,10, 0≤w1<0,10, et 18≤x1/y1.

7. Électrode positive selon la revendication 1, dans laquelle le second matériau actif d'électrode positive comprend un second oxyde lithium-cobalt-nickel représenté par la [Formule 2] :
[Formule 2] Liₐ₂[Niₓ₂Co_{y2}M³_{z2}M⁴_{w2}]O₂
dans laquelle, dans la Formule 2,
M³ est Mn, Al, ou une combinaison de ceux-ci,
M⁴ est au moins un élément sélectionné parmi le groupe consistant en Zr, B, W, Mg, Ce, Hf, Ta, La, Ti, Sr, Ba, F, P, et S, et
0,8≤a2≤1,2, 0,80≤x2<0,90, 0<y2<0,20, 0<z2<0,20, 0≤w2<0,20, et x2/y2<18.

8. Électrode positive selon la revendication 1, dans laquelle la seconde couche de matériau actif d'électrode positive présente une épaisseur de 10 µm ou moins.

9. Électrode positive selon la revendication 1, dans laquelle l'électrode positive présente une teneur en charge de 4 mAh/cm² ou plus.

10. Électrode positive selon la revendication 9, dans laquelle l'électrode positive présente la teneur en charge de 4 mAh/cm² à 20 mAh/cm²

11. Batterie secondaire au lithium comprenant l'électrode positive selon l'une quelconque des revendications 1 à 10.
